# EUROPEAN PATENT SPECIFICATION

(11) **EP 2 764 156 B1**
(45) Date of publication and mention of the grant of the patent: **07.06.2017**
(21) Application number: 12838006.0
(22) Date of filing: 02.10.2012
(51) Int. Cl.: D21C 9/06, D21C 9/18, B01D 33/72, D21D 1/40, D21F 1/02, D21F 1/04

(54) **PULP DISTRIBUTION DEVICE**
ZELLSTOFFVERTEILUNGSVORRICHTUNG
DISPOSITIF DE DISTRIBUTION DE PÂTE

(30) Priority: 03.10.2011 SE 1150911
(43) Date of publication of application: 13.08.2014
(73) Proprietor: Valmet Aktiebolag, 851 94 Sundsvall (SE)
(72) Inventor: ANDERSSON, Rickard, 864 92 Matfors (SE); LUNDBERG, Jörgen, 856 43 Sundsvall (SE); BERGDAHL, Anders, 863 34 Sundsbruk (SE); HEDBLOM, Anders, 853 57 Sundsvall (SE)
(74) Representative: Saitton, Hanna Johanna
(86) International application number: PCT/SE2012/051049
(87) International publication number: WO 2013/051995

(56) References cited:
- WO-A1-88/05840
- WO-A1-90/12919
- WO-A1-2009/131527
- WO-A1-2009/131527
- DE-A1- 4 105 803
- US-A- 4 292 123
- US-A- 4 343 708
- US-A- 4 343 708

## Description

### TECHNICAL FIELD

The present invention relates to treatment of cellulose pulp and more specifically to an arrangement for washing and/or dewatering of cellulose pulp.

### BACKGROUND

Pulp washing is a key operation in the pulping line. There are many different types of washers available, including wash presses, dewatering presses, wire presses, diffusers and filters.

A well-known washing machine is a twin-roll press of the general type disclosed in US Patent 3,980,518, for example. A twin-roll press has two counter-rotating rolls with perforated outer surfaces. A web of pulp is formed on the respective rolls and transported in the direction of rotation in a vat partially surrounding the rolls, until the so-called press nip between the rolls. The incoming pulp can be distributed lengthwise onto the respective rolls by means of a distribution device, for example using a rotating screw, such as the device shown in EP 1 229 164 B1 or the device shown in SE 532 366 C2. The twin-roll press uses the washing principles of *displacement,* where dirty liquid (liquor) in the pulp is replaced by cleaner wash liquid added to the vat, and *pressing,* where dirty liquid is pressed (squeezed) out from the pulp, in particular at the press nip. WO 2009/131527 discloses a device for distribution of cellulose pulp to a movable perforated processing surface in a pulp processing device, which device for distribution comprises a rotating distribution means arranged to distribute pulp along the entire length of its outlet.

A washing machine like the twin-roll press, for example, is associated with a limited capacity. This is especially problematic in applications where the consistency of the incoming pulp is comparatively low, for instance in the screening department of a pulp mill. When the input consistency is low, a larger wash press, or, alternatively, two wash presses will be needed to provide a particular output consistency. A known solution is to increase the pulp consistency before the pulp enters the washing machine by means of a thickener. However, introducing a thickener in front of the wash press has drawbacks. The fiberline will comprise one (or several) additional machines resulting in inferior efficiency and performance. Also, conventional thickeners lack appropriate means for removal of the pulp after thickening. An alternative solution would thus be very desirable.

### SUMMARY

An object of the present invention is to increase the capacity of an apparatus for washing and/or dewatering pulp. Another object is to increase the efficiency of the apparatus. Still another object is to provide a washing and/or dewatering apparatus suitable for low consistency applications.

These and other objects are achieved in accordance with the appended claims.

The present invention is based on the recognition that a higher capacity can be achieved by introducing an additional dewatering surface, arranged in the pulp distribution device of the washing and/or dewatering apparatus. By means of the new dewatering surface, the initial dewatering in the apparatus is increased, which implies a number of advantages, such as:
- A higher capacity of the apparatus
- Low input consistencies can be handled by comparatively small washing apparatuses
- No separate thickener needed before the washing apparatus
- A higher washing efficiency due to a higher pulp consistency in the vat

More specifically, a pulp distribution device is provided for distribution of cellulose pulp having a concentration of 2-13% to a movable first permeable surface in an apparatus for washing and/or dewatering of cellulose pulp, preferably an apparatus for washing of cellulose pulp, whereby the pulp, in operation, is transported together with the first permeable surface. The pulp distribution device comprises an inlet for incoming cellulose pulp, an outlet for output of cellulose pulp to the first permeable surface, a first rotatable distribution means arranged in the pulp distribution device for longitudinal distribution of pulp, and a second permeable surface arranged so as to, during operation, allow throughflow of filtrate from pulp in the pulp distribution device, whereby an initial dewatering of the pulp takes place in the pulp distribution device, wherein the second permeable surface is rotatable.

Typically, the first rotatable distribution means is arranged for distribution of pulp to the width of a pulp web formed by the pulp on the first permeable surface. The pulp distribution device may with advantage be adapted for distribution of pulp to substantially the entire width of the pulp web.

In a roll press application, longitudinal distribution of pulp means distribution of pulp along the length of a press roll. The rotation axis of the first rotatable distribution means is substantially parallel to the rotation axis of the press roll.

The first rotatable distribution means and the second permeable surface are typically arranged in a housing of the pulp distribution device. The second permeable surface may hereby be arranged within the housing or be integrated in, i.e. form part of, the housing.

The invention provides for initial dewatering (or thickening) of the pulp, before the pulp is distributed onto the first permeable surface. The pulp first reaches the second permeable surface, and thereafter reaches the first permeable surface. The second permeable surface, in the pulp distribution device, forms a dewatering surface by means of which the initial dewatering in the pulp distribution device is effected.

The pulp distribution device of the invention is generally adapted to output pulp directly to the movable first permeable surface. In a roll press application, the pulp distribution device would typically be connected to the vat enclosing the press roll.

The second permeable surface is physically separate from the first permeable surface. The second permeable surface may for instance be a perforated surface, but other surfaces through which filtrate may pass also lie within the scope of the invention.

According to one embodiment the second permeable surface is the outer surface of the first rotatable distribution means and the first rotatable distribution means is a perforated roll. There may with advantage be a second rotatable distribution means in the pulp distribution device, for longitudinal distribution of pulp.

According to one embodiment, the pulp distribution device comprises a cleaning means, arranged so as to, during operation, remove dewatered pulp from the second permeable surface. The cleaning means is optional but gives improved dewatering by keeping the second permeable surface (dewatering surface) freer.

According to one embodiment the pulp distribution device comprises a device for wash liquid addition arranged so as to, in operation, add wash liquid to pulp in the pulp distribution device in vicinity of the second permeable surface. The invention then provides for initial washing of the pulp, before the pulp reaches the first permeable surface.

According to another aspect of the present invention, an apparatus for washing and/or dewatering of cellulose pulp is provided, which apparatus comprises the above pulp distribution device. The apparatus may with advantage be a roll press and the movable first permeable surface the perforated outer surface of a press roll.

### BRIEF DESCRIPTION OF THE DRAWINGS

The invention, together with further objects and advantages thereof, may best be understood by reference to the following description and appended drawings, in which:
Fig. 1 is a schematic cross-sectional view illustrating an example pulp distribution device in a washing apparatus (partially shown) according to prior art;
Fig. 2 is a schematic cross-sectional view illustrating a pulp distribution device in a washing apparatus (partially shown) according to an exemplifying embodiment of the invention;
Figs. 3-6, 8-10 correspond to the view in Fig. 2 and illustrate pulp distribution devices according to other exemplifying embodiments of the invention; and
Fig. 7 is a schematic cross-sectional view illustrating a twin-roll press with pulp distribution devices according to an exemplifying embodiment of the invention.

### DETAILED DESCRIPTION

In the drawings, similar or corresponding elements are denoted by the same reference numbers.

For the purpose of this disclosure, a "rotatable distribution means" refers to a rotatable means which affects the distribution of pulp in the pulp distribution device. The rotatable distribution means is adapted to rotate continuously when the washing and/or dewatering apparatus is in operation. Through its rotating action the rotatable distribution means has a distribution effect. This distribution effect can be more or less pronounced depending on the type of rotatable distribution means, the design of the housing of the pulp distribution device, and other things. The rotatable distribution means can be the sole provider of the distribution effect in the pulp distribution device, or there may be other distribution means also contributing.

Furthermore, for the purpose of this disclosure, "longitudinal distribution of pulp" refers to distribution of pulp along/to the width of the pulp web formed on the first movable permeable surface. The pulp is thus distributed in a direction substantially transverse to the direction of movement of the movable first permeable surface. This means that the rotatable distribution means is arranged with its rotation axis substantially transverse to the direction of movement of the movable first permeable surface.

Accordingly, in a roll press application "longitudinal distribution of pulp" refers to distribution of pulp along/to the width of the pulp web formed on the press roll. The pulp is thus distributed in a direction substantially transverse to the rotational direction of the press roll. This means that the rotatable distribution means is arranged with its rotation axis substantially transverse to the rotational direction of the press roll. In a roll press application, longitudinal distribution of pulp consequently means lengthwise distribution of pulp, typically along the length of the press roll and along the length of the pulp distribution device.

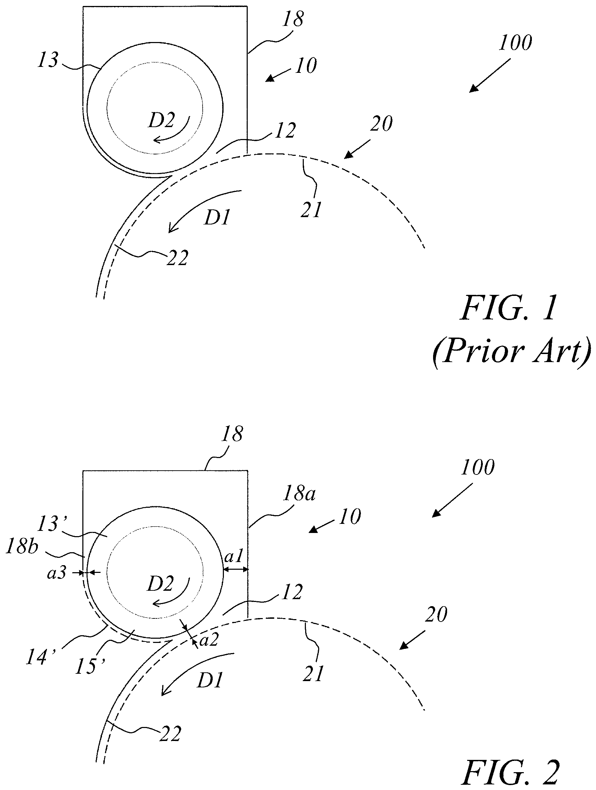

**Fig. 1** is a schematic cross-sectional view illustrating an example pulp distribution device 10 according to prior art. The pulp distribution device 10 is arranged in an apparatus 100, such as a twin-roll press, the upper left side of which is shown, so as to distribute pulp onto a rotatable perforated surface 21, i.e. the outer surface of press roll 20, via outlet 12. The pulp distribution device is of the type described in SE 532 366 C2 and consists of an elongated housing 18 with a rotatable screw 13 inside. The pulp distribution device 10 extends along substantially the entire length of the press roll 20 and the rotation axis of the screw 13 is parallel to the rotation axis of the press roll 20. The press roll 20 is partially enclosed by a vat 22 (also known as trough) and the pulp is transported together with the perforated surface 21, in the rotational direction, inside the pulp distribution device 10 and the vat 22. Filtrate from the pulp is allowed to flow through the perforated roll surface 21, which thus serves as a dewatering surface.

**Fig. 2** illustrates a pulp distribution device 10 according to an exemplifying embodiment of the invention. The view corresponds to the view of Fig. 1. In Fig. 2, there is a permeable surface 14' (illustrated by a dashed line) in the pulp distribution device 10. The permeable surface 14' is arranged so as to allow throughflow of filtrate from pulp in the pulp distribution device 10, whereby an initial dewatering of the pulp takes place in the pulp distribution device 10 before the pulp reaches the perforated roll surface 21. The permeable surface 14' may for example be a perforated plate.

The permeable surface 14' of the pulp distribution device 10 in Fig. 2 is stationary. It forms part of a wall in a housing 18 enclosing a rotatable distribution means 13', such as a rotatable distribution screw. The rotatable distribution means 13' may with advantage be arranged with its periphery so close to the permeable surface 14' that it forms a cleaning means 15' for removal of dewatered pulp from the permeable surface 14'. It is then preferred that the permeable surface 14' is curved and has a shape at least partially adapted to the corresponding part of the outer surface of rotatable distribution means 13'. In this way, efficient cleaning of the permeable surface 14' and thereby improved dewatering is achieved.

The rotatable distribution means 13' is arranged to distribute pulp evenly inside the housing 18 of the pulp distribution device 10. The rotatable distribution means 13' is longitudinal and may for example be a rotatable distribution screw, such as a screw, a screw with wings, and a screw with scraper blades. However, other embodiments, for example straight rotor shafts with wings, paddles or blades, also lie within the scope of the invention. In general, the rotatable distribution means 13' has both a distributing effect and a stirring effect.

There may also be embodiments (not shown) where the shape of the rotatable distribution means 13' and/or the permeable surface 14' or the distance between the rotatable distribution means 13' and the permeable surface 14' is not such that the rotatable distribution means 13' forms a cleaning means for removal of dewatered pulp from the permeable surface 14'. In such a case a separate cleaning means may with advantage be provided, which should be movable although not necessarily rotatable. The design of the cleaning means depends on the shape and position of the permeable surface 14'.

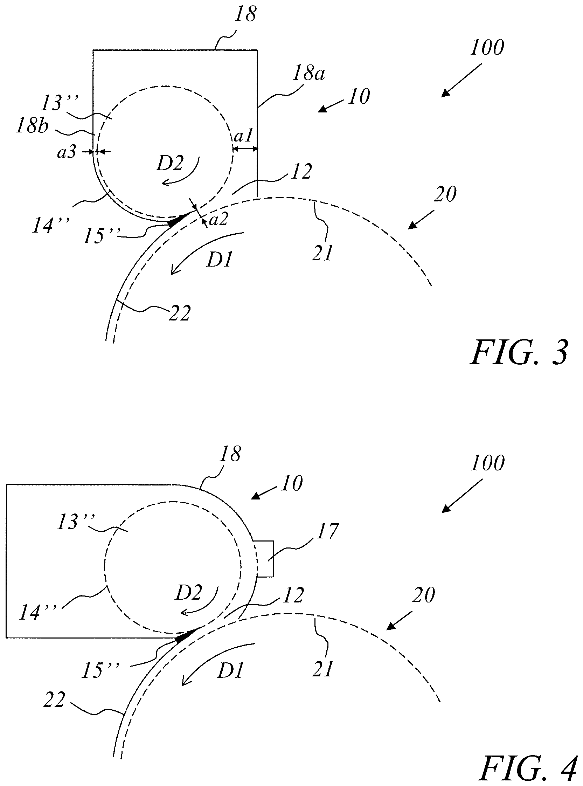

**Fig. 3** illustrates another embodiment of the invention, where the pulp distribution device 10 has a rotatable permeable surface 14". The permeable surface 14" of the pulp distribution device 10 in Fig. 3 is the outer surface of the rotatable distribution means 13", which is a perforated roll. Filtrate is allowed to pass through the perforated roll 13" and is typically collected at one or both ends of the perforated roll 13".

Generally, some kind of cleaning means 15", for example a doctor device, is needed in order to remove dewatered pulp from the rotatable permeable surface 14". In the illustrated embodiment, the doctor device 15" is arranged in the area where the pulp distribution device 10 meets the vat 22. The cleaning means 15" provides for more efficient initial dewatering and ensures that dewatered pulp is not stuck onto the rotatable permeable surface 14".

According to one embodiment, the housing 18 of the pulp distribution device 10 is comparatively high. The height of the housing, i.e. of its long walls 18a, 18b should be selected such that the pressure in the pulp distribution device 10 is enough to provide efficient longitudinal pulp distribution when the housing 18, during operation, is filled with pulp. The height of the long walls 18a, 18b could in such an embodiment for example be selected to be at least two times the roll diameter.

**Fig. 4** illustrates another embodiment of the invention, with a rotatable permeable surface 14" and optional cleaning means 15" like in Fig. 3. The pulp distribution device 10 of Fig. 4 further comprises a device for wash liquid addition 17, arranged so as to, in operation, add wash liquid to pulp in vicinity of the permeable surface 14". Hereby, both initial dewatering and initial washing is performed in the pulp distribution device 10, which provides for an even more efficient washing apparatus. The device for wash liquid addition 17 could for example be of a kind conventionally arranged in connection with the vat 22 of a wash press. It could e.g. use a number of nozzles for transferring the wash liquid to the interior of the pulp distribution device 10.

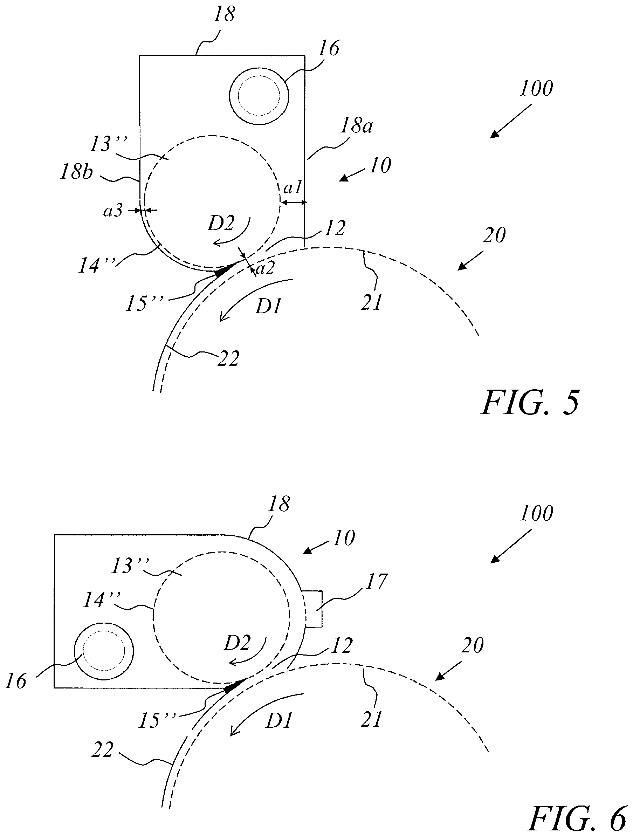

**Fig. 5** illustrates another embodiment of the invention, with a rotatable permeable surface 14" and optional cleaning means 15". However, the pulp distribution device 10 of Fig. 5 also comprises an additional rotatable distribution means 16 for longitudinal distribution of pulp. The additional rotatable distribution means 16 is preferably longitudinal. It would typically be arranged with is axis of rotation further away from the perforated roll surface 21 than the axis of rotation of the rotatable distribution means 13".

The additional rotatable distribution means 16 is arranged to distribute pulp evenly inside housing 18 of the pulp distribution device 10. It may for example be a rotatable distribution screw, such as a screw, a screw with wings, and a screw with scraper blades. However, other embodiments, for example straight rotor shafts with wings, paddles or blades, also lie within the scope of the invention. In general, the additional rotatable distribution means 16 has both a distributing effect and a stirring effect.

An advantageous feature of the additional rotatable distribution means 16 is that it helps distributing pulp along the length of the pulp distribution device 10 and along the length of the perforated roll surface 21. Its stirring action causes movement of the pulp in the pulp distribution device 10, improving the longitudinal pulp distribution.

**Fig. 6** illustrates another embodiment of the invention, with a rotatable permeable surface 14", optional cleaning means 15", and an additional rotatable distribution means 16 like in Fig. 5. However, the pulp distribution device 10 of Fig. 6 also comprises a device for wash liquid addition 17 arranged so as to, in operation, add wash liquid to pulp in vicinity of the permeable surface 14". Both initial dewatering and initial washing is performed in the pulp distribution device 10, which provides for an efficient washing apparatus. The device for wash liquid addition 17 could for example be of a kind conventionally arranged in connection with the vat 22 of a wash press. It could e.g. use a number of nozzles for transferring the wash liquid to the interior of the pulp distribution device 10. By means of the additional rotatable distribution means 16, the pulp is distributed more evenly in the pulp distribution device, whereby the initial dewatering and the initial washing in the pulp distribution device become even more efficient.

The pulp distribution device 10 of Figs. 4 and 6 has a different configuration of the housing 18 and thereby a different arrangement of the rotatable distribution means 13" with respect to the housing 18 than the other illustrated example embodiments. This illustrates the fact that the invention is not restricted to a particular housing design. It should also be mentioned that the device for wash liquid addition 17 of Fig. 4 and 6 may very well be used for example in a housing of the type shown in Fig. 2, 3 or 5.

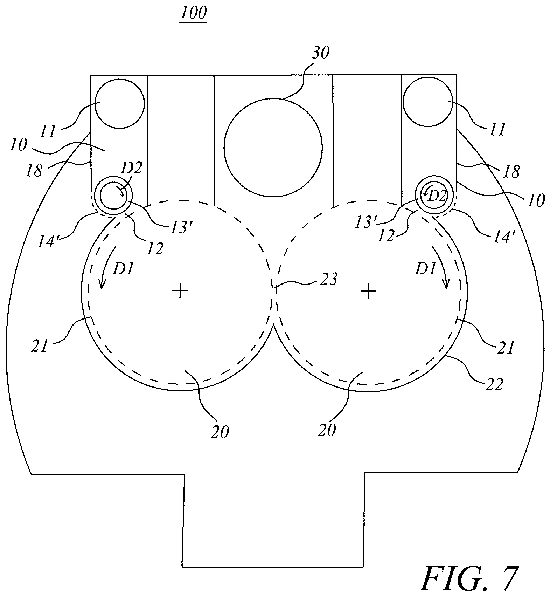

**Fig. 7** illustrates a twin-roll press 100 with pulp distribution devices 10 according to an exemplifying embodiment of the invention. The press 100 comprises two co-operating cylindrical press rolls/drums 20. The two press rolls 20 are arranged to rotate in opposite directions during operation (as indicated by the arrows) and each has a permeable outer surface 21, more specifically a perforated metal sheet. The press rolls 20 are partially enclosed by a vat 22 (also known as trough) formed by guide surfaces, arranged at a distance from the perforated outer surface 21 of the respective press roll 20 so as to partially enclose the press roll in the circumferential direction.

A pulp distribution device 10, in this example the pulp distribution device of Fig. 2, is associated with each press roll 20. The pulp distribution device 10 is arranged at the upper portion of the press roll 20 for distribution of pulp onto the perforated roll surface 21. It typically comprises an elongated housing 18, extending lengthwise along a substantial portion of the press roll. The pulp distribution device 10 is connected to the vat 22. During operation, pulp enters the pulp distribution device 10 via its inlet 11, which for example can be arranged at the middle of the twin-roll press 100 as seen in the longitudinal direction. The input consistency of the pulp is in the range of 2-13%.

In the pulp distribution device 10, the pulp is dewatered and distributed in the longitudinal direction and output through the outlet 12 during formation of a pulp web on the perforated roll surface 21. The pulp web is transported, guided by the vat 22, in the direction of rotation D1 to be pressed in a nip (also known as pinch) 23 where the distance between the press rolls 20 is smallest. The press rolls 20 comprise axial filtrate channels (not shown) which receive the filtrate that passes through the perforated roll surface 21, and typically transport it towards the ends of the press rolls 20, where it is output. The press 100 is preferably an apparatus for washing of cellulose pulp. Washing liquid may e.g. be supplied to the pulp web in the vat 22. The pulp is output by means of a discharge screw 30.

In Fig. 7, two press rolls 20, each provided with a pulp distribution device 10, are arranged next to each other, with the rotation centers in the same horizontal plane. The invention is also suitable for washing and/or dewatering apparatuses where, for example, the rolls are differently arranged, or only one perforated roll is used, as well as for another apparatus where pulp is dewatered on a movable permeable surface.

The vat 22 may be formed by one continuous vat structure (Fig. 7) or, alternatively, comprise a number of vat portions linked together (not shown). In the latter case, one or more vat portions may be movable to and from the press roll 20, for example so as to facilitate cleaning of the press roll. There could, for example, be one movable vat portion extending into each pulp distribution device, e.g. pivotally attached at one of its ends.

Particular embodiments of the pulp distribution device 10 will now be described with reference to Figs. 2, 3 and 5. The press roll 20 with the rotatable perforated surface 21 rotates in a direction D1 and the rotatable distribution means 13', 13" rotates in a direction D2, such that its peripheral surface moves in the same direction as the perforated surface 21 of the press roll 20 in the area where they face each other. The rotatable distribution means 13', 13" is arranged such that a pulp web can be formed between it and the perforated surface 21. The rotatable distribution means 13', 13" preferably rotates at such a speed that its peripheral surface moves faster than the perforated surface 21. The pulp distribution device 10 is placed essentially above the perforated surface 21 of the press roll 20, and the pulp may flow substantially freely downwards through the outlet 12 upon formation of the pulp web.

The outlet 12 opens towards the pulp web, which, during operation, is formed on the rotatable perforated surface 21 and preferably has a length that corresponds to the width of the pulp web. The outlet 12 has a width which is delimited by a first long wall 18a and a second opposed long wall 18b essentially parallel to the first long wall. The rotatable distribution means 13', 13" is arranged between the long walls 18a, 18b to distribute the pulp along essentially the entire length of the outlet 12. According to one embodiment the rotatable distribution means 13', 13" is placed so that a first distance a1 between the rotatable distribution means 13', 13" and the first long wall 18a is larger than a second distance a2 between the rotatable distribution means 13', 13" and the rotatable perforated surface 21.

The thickness of the pulp web is delimited on one side by the press roll 20 and on the other side by the vat 22, and would normally be thinner than the distance a2 between the rotatable distribution means 13', 13" and the press roll 20. The distance a2 can for example be up to two or three times as large as the thickness of the pulp web.

In one embodiment, the rotatable distribution means 13', 13" is further so placed that a third distance a3 between the rotatable distribution means 13', 13" and the second long wall 18b is essentially smaller than the second distance a2.

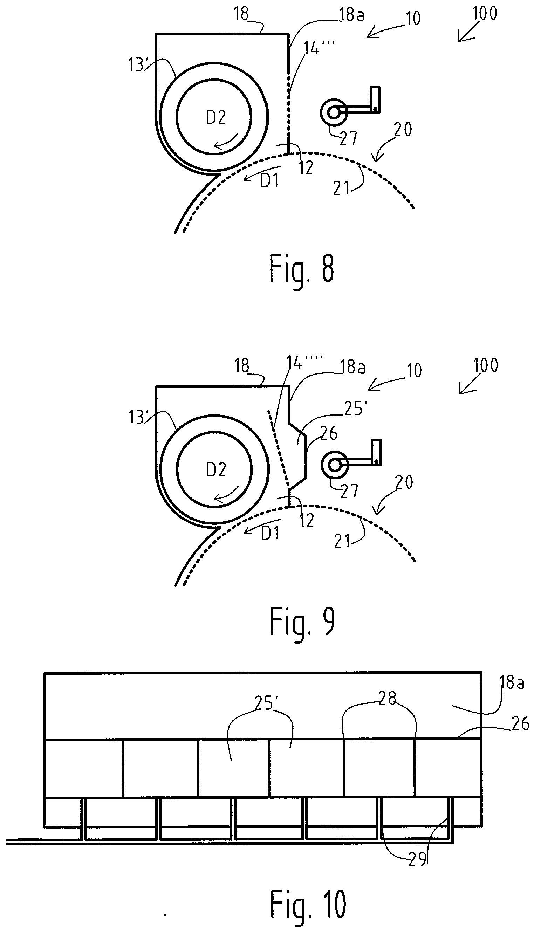

A further embodiment is illustrated in **Fig. 8** where a pulp distribution device 10 is provided with a second permeable surface 14'" arranged in the long wall 18a. The pulp distribution device 10 is preferably pressurized, which gives a dewatering through the second permeable surface 14'" and filtrate will fall out onto the press roll 20. A spray pipe 27 may be used for cleaning, which may be movable so that the spray pipe 27 can clean either the second permeable surface 14"' of the pulp distribution device 10 or the first permeable surface 21 of the press roll 20. Another alternative is to use separate spray pipes 27. This cleaning method is possible for all embodiments.

In **Fig. 9** a second permeable surface 14"" is instead arranged as an oblique plate inside the housing 18 to further improve the dewatering, by creating a converging zone for increased dewatering. Of course, the long wall 18a may be oblique instead of having an internal wall. To facilitate handling of the filtrate, a chamber plate 26 forming a chamber 25' may be arranged outside the second permeable surface 14"" in any of the embodiments. The chamber plate 26 may be removable to facilitate cleaning if spray pipes 27 are used.

**Fig. 10** illustrates a variant of the embodiment in Fig. 9 with another way of cleaning the second permeable surface 14"", which is applicable to any embodiment using a corresponding chamber 25'. The chamber 25' inside the chamber plate 26 is preferably divided into a number of separate chambers 25' by a number of chamber walls 28. Suction pipes 29 may be connected to each separate chamber 25' to remove the filtrate. When cleaning is needed, the flow in the suction pipes 29 is reversed and back flushing is made for the cleaning. If there are more than one separate chamber 25' the pressure will be better distributed over the permeable surface 14"' and the cleaning will be more efficient. Having more than one separate chamber 25' also makes it possible to control the pressure difference between the front side and the back side of the permeable surface 14"'.

All different cleaning methods may be combined.

The above-described embodiments with the specified design of the pulp distribution device 10, in particular the "open" outlet 12 and the specified position of the rotatable distribution means 13', 13" within the pulp distribution device 10, have some advantageous effects. The pulp distribution device 10 provides distribution of pulp along the press roll 20 but also *forming* of the pulp web onto the press roll 20. Moreover, the dewatering when the pulp first reaches the press roll 20 increases.

It should however be emphasized that the invention is not restricted to a particular type of pulp distribution device. It is, for example, possible to have an outlet formed by a number of holes in the bottom of the pulp distribution device 10 like in EP 1 229 164 B1 instead of the illustrated open outlet 12.

The present invention, according to all described embodiments and other embodiments within its scope, is especially advantageous in low consistency applications. Low consistency applications here refers to an input consistency of the incoming pulp to the washing/dewatering apparatus in the range of 2-5%. The capacity of a washing apparatus like a twin-roll press, for example, depends on the input consistency of the pulp, since the apparatus is hydraulically limited by the amount of liquid to be removed. By means of the invention, an increased dewatering is achieved by the new dewatering surface 14', 14" for initial dewatering in the pulp distribution device 10. The consistency of the pulp will therefore be higher when the pulp enters the vat 22. This means that low input consistencies can be handled by comparatively small washing apparatuses. Also, no separate thickener will be needed before the washing apparatus. The washing apparatus can be said to have a built-in thickener in the pulp distribution device 10 according the invention.

The initial dewatering in a pulp distribution device 10 according to the present invention is a filtrate flow over the new dewatering surface (i.e. the permeable surface 14', 14", 14"', 14"" in the pulp distribution device) due to a pressure difference over this surface. Normally, the pressure will, during operation, be higher within the pulp-containing space of the pulp distribution device 10 than on the other side of the permeable surface 14', 14". The pulp distribution device 10 may also be pressurized to increase the pressure difference over the permeable surface 14', 14", 14"', 14"", or, alternatively an under-pressure can be created on the outside of the permeable surface 14', 14", 14"', 14"" (i.e. outside the permeable surface 14' of Fig. 2 or inside the rotatable distribution means 13" of Figs. 3-6). This can be done by measures well-known to the person skilled in the art.

In the illustrated embodiments, there is one permeable surface 14', 14", 14'", 14"" in each pulp distribution device 10. It should be noted that embodiments with more than one dewatering surface 14', 14", 14"', 14"" in the pulp distribution device 10 are also possible. The pulp distribution device could comprise two permeable surfaces for initial dewatering, both stationary, both rotatable, or one stationary and the other rotatable. There may also be more than two permeable surfaces for initial dewatering.

## Claims

1. A pulp distribution device (10) for distribution of cellulose pulp having a concentration of 2-13% to a movable first permeable surface (21) in an apparatus (100) for washing and/or dewatering of cellulose pulp, whereby the pulp, in operation, is transported together with the first permeable surface, said pulp distribution device comprising
an inlet (11) for incoming cellulose pulp,
an outlet (12) for output of cellulose pulp to the first permeable surface, and
a first rotatable distribution means (13'; 13") arranged in the pulp distribution device for longitudinal distribution of pulp,
**characterized in that** the first rotatable distribution means (13'; 13") is a screw or a roll and **in that** the pulp distribution device further comprises
a second permeable surface (14'; 14"; 14"'; 14"") arranged so as to, during operation, allow throughflow of filtrate from pulp in the pulp distribution device (10), whereby an initial dewatering of the pulp takes place in the pulp distribution device, wherein the second permeable surface (14") is rotatable.

2. The pulp distribution device of claim 1, wherein the first rotatable distribution means (13'; 13") and the second permeable surface (14'; 14"; 14"'; 14"") are arranged in a housing (18) of the pulp distribution device (10).

3. The pulp distribution device of claim 1 or 2, wherein the second permeable surface (14") is the outer surface of the first rotatable distribution means (13"), the first rotatable distribution means being a perforated roll.

4. The pulp distribution device of claim 3, comprising a doctor device forming a cleaning means (15") for removal of dewatered pulp from the second permeable surface (14").

5. The pulp distribution device of claim 3 or 4, comprising a second rotatable distribution means (16) for longitudinal distribution of pulp.

6. The pulp distribution device of claim 5, wherein the second rotatable distribution means (16) is arranged with is axis of rotation further away from the first permeable surface (21) than the axis of rotation of the first rotatable distribution means (13 ").

7. The pulp distribution device of claim 5 or 6, wherein the second rotatable distribution means (16) is selected from the group of: a screw, a screw with wings, and a screw with scraper blades.

8. The pulp distribution device of any of previous claims, comprising a device for wash liquid addition (17) arranged so as to, in operation, add wash liquid to pulp in the pulp distribution device (10) in vicinity of the second permeable surface (14'; 14"; 14"'; 14" ").

9. The pulp distribution device of any of previous claims, wherein the first permeable surface (21) rotates in a direction (D1) and the first rotatable distribution means (13'; 13") rotates in a direction (D2), such that its peripheral surface moves in the same direction as the first permeable surface in the area where they face each other, the first rotatable distribution means being arranged such that a pulp web can be formed between the first rotatable distribution means and the first permeable surface.

10. The pulp distribution device of any of previous claims, wherein the outlet (12) opens towards a pulp web, which, during operation, is formed on the first permeable surface (21) and which outlet (12) has a length that corresponds to the width of the pulp web and a width delimited by a first long wall (18a) and a second opposed long wall (18b) essentially parallel to the first long wall, the first rotatable distribution means (13'; 13") being arranged between the long walls (18a, 18b) to distribute the pulp along essentially the entire length of the outlet, and the first rotatable distribution means being placed so that a first distance (a1) between the first rotatable distribution means and the first long wall (18a) is larger than a second distance (a2) between the first rotatable distribution means and the first permeable surface.

11. The pulp distribution device of claim 10, wherein the first rotatable distribution means (13'; 13") is so placed that a third distance (a3) between the first rotatable distribution means and the second long wall (18b) is essentially smaller than the second distance (a2) between the first rotatable distribution means and the first permeable surface (21).

12. The pulp distribution device according to any of the previous claims , wherein the pulp distribution device (10) further comprises a chamber plate (26) which forms a chamber (25) for collection of filtrate.

13. The pulp distribution device according to claim 12, wherein the chamber (25) for collection of filtrate is divided into a number of separate chambers (25').

14. The pulp distribution device according to any of the previous claims, wherein spray pipes (27) are provided for removal of dewatered pulp from the second permeable surface (14'; 14"; 14'"; 14"").

15. The pulp distribution device according to any of the claims 1-13, wherein suction pipes (29) are provided for back flushing for removal of dewatered pulp from the second permeable surface(14'; 14"; 14"'; 14"").

16. An apparatus (100) for washing and/or dewatering of cellulose pulp having a movable first permeable surface (21) together with which pulp, in operation, is transported, said apparatus comprising the pulp distribution device (10) of any of claims 1-11.

17. The apparatus of claim 16, being a roll press (100) and the movable first permeable surface (21) being a rotatable perforated outer surface of a press roll (20) of the roll press.

## Patentansprüche

1. Pulpeverteilungsvorrichtung (10) zur Verteilung von Zellstoff mit einer Konzentration von 2-13 % zu einer beweglichen ersten permeablen Fläche (21) in einer Apparatur (100) zum Waschen und/oder Entwässern von Zellstoff, wobei die Pulpe im Betrieb zusammen mit der ersten permeablen Fläche transportiert wird, wobei die Pulpeverteilungsvorrichtung umfasst:
einen (11) Einlass für ankommenden Zellstoff,
einen Auslass (12) für die Ausgabe von Zellstoff an die erste permeable Fläche, und ein erstes drehbares Verteilungsmittel (13'; 13"), das in der Pulpeverteilungsvorrichtung für eine Längsverteilung von Pulpe eingerichtet ist,
**dadurch gekennzeichnet, dass**
das erste drehbare Verteilungsmittel (13'; 13") eine Schnecke oder eine Walze ist, und dass die Pulpeverteilungsvorrichtung ferner umfasst:
eine zweite permeablen Fläche (14'; 14"; 14"'; 14""), die so eingerichtet ist, um im Betrieb einen Durchfluss von Filtrat von Pulpe in die Pulpeverteilungsvorrichtung (10) zuzulassen, wodurch in der Pulpeverteilungsvorrichtung eine anfängliche Entwässerung der Pulpe stattfindet, wobei die zweite permeable Fläche (14") drehbar ist.

2. Pulpeverteilungsvorrichtung nach Anspruch 1, wobei das erste drehbare Verteilungsmittel (13'; 13") und die zweite permeable Fläche (14'; 14"; 14"'; 14"") in einem Gehäuse (18) der Pulpeverteilungsvorrichtung (10) eingerichtet sind.

3. Pulpeverteilungsvorrichtung nach Anspruch 1 oder 2, wobei die zweite permeablen Fläche (14") die Außenfläche des ersten drehbaren Verteilungsmittels (13") ist, wobei das erste drehbare Verteilungsmittel eine perforierte Walze ist.

4. Pulpeverteilungsvorrichtung nach Anspruch 3, umfassend eine Rakelvorrichtung, die ein Reinigungsmittel (15") zur Entfernung von entwässerter Pulpe von der zweiten permeablen Fläche (14") bildet.

5. Pulpeverteilungsvorrichtung nach Anspruch 3 oder 4, umfassend ein zweites drehbares Verteilungsmittel (16) zur Längsverteilung von Pulpe.

6. Pulpeverteilungsvorrichtung nach Anspruch 5, wobei das zweite drehbare Verteilungsmittel (16) mit seiner Drehachse weiter entfernt von der ersten permeablen Fläche (21) als die Drehachse des ersten drehbaren Verteilungsmittels (13") eingerichtet ist.

7. Pulpeverteilungsvorrichtung nach Anspruch 5 oder 6, wobei das zweite drehbare Verteilungsmittel (16) aus der Gruppe bestehend aus einer Schnecke, einer Schnecke mit Flügeln und einer Schnecke mit Schaberklingen ausgewählt ist.

8. Pulpeverteilungsvorrichtung nach einem der vorhergehenden Ansprüche, umfassend eine Vorrichtung zur Waschflüssigkeitszugabe (17), die so eingerichtet ist, um im Betrieb der Pulpe Waschflüssigkeit in der Pulpeverteilungsvorrichtung (10) in der Nähe der zweiten permeablen Fläche (14'; 14"; 14"'; 14"") hinzuzufügen.

9. Pulpeverteilungsvorrichtung nach einem der vorhergehenden Ansprüche, wobei sich die erste permeablen Fläche (21) in einer Richtung (D1) dreht und sich das erste drehbare Verteilungsmittel (13'; 13") in einer Richtung (D2) dreht, so dass sich seine Umfangsfläche in dem Bereich, in dem sie einander zugewandt sind, in der gleichen Richtung dreht wie die erste permeable Fläche, wobei das erste drehbare Verteilungsmittel derart eingerichtet ist, dass eine Pulpebahn zwischen dem ersten drehbaren Verteilungsmittel und der ersten permeablen Fläche gebildet werden kann.

10. Pulpeverteilungsvorrichtung nach einem der vorhergehenden Ansprüche, wobei sich der Auslass (12) in Richtung einer Pulpebahn öffnet, die im Betrieb auf der ersten permeablen Fläche (21) gebildet ist, und wobei der Auslass (12) eine Länge aufweist, die der Breite der Pulpebahn entspricht, und eine Breite aufweist, die von einer ersten langen Wand (18a) und einer zweiten gegenüberliegenden Wand (18b), die im Wesentlichen parallel zu der ersten langen Wand verläuft, begrenzt ist, wobei das erste drehbare Verteilungsmittel (13'; 13") zwischen den langen Wänden (18a, 18b) eingerichtet ist, um die Pulpe entlang der im Wesentlichen gesamten Länge des Auslasses zu verteilen, und das erste drehbare Verteilungsmittel so angeordnet ist, dass ein erster Abstand (a1) zwischen dem ersten drehbaren Verteilungsmittel und der ersten langen Wand (18a) größer ist als ein zweiter Abstand (a2) zwischen dem ersten drehbaren Verteilungsmittel und der ersten permeablen Fläche.

11. Pulpeverteilungsvorrichtung nach Anspruch 10, wobei das erste drehbare Verteilungsmittel (13'; 13") derart angeordnet ist, dass ein dritter Abstand (a3) zwischen dem ersten drehbaren Verteilungsmittel und der zweiten langen Wand (18b) im Wesentlichen kleiner ist als der zweite Abstand (a2) zwischen dem ersten drehbaren Verteilungsmittel und der ersten permeablen Fläche (21).

12. Pulpeverteilungsvorrichtung nach einem der vorhergehenden Ansprüche, wobei die Pulpeverteilungsvorrichtung (10) ferner eine Kammerplatte (26) umfasst, die eine Kammer (25) zum Sammeln von Filtrat bildet.

13. Pulpeverteilungsvorrichtung nach Anspruch 12, wobei die Kammer (25) zum Sammeln von Filtrat in eine Anzahl separater Kammern (25') unterteilt ist.

14. Pulpeverteilungsvorrichtung nach einem der vorhergehenden Ansprüche, wobei Sprührohre (27) zur Entfernung von entwässerter Pulpe von der zweiten permeablen Fläche (14'; 14"; 14"'; 14"") vorgesehen sind.

15. Pulpeverteilungsvorrichtung nach einem der Ansprüche 1-13, wobei Saugrohre (29) zum Rückspülen zur Entfernung von entwässerter Pulpe von der zweiten permeablen Fläche (14'; 14"; 14"'; 14"") vorgesehen sind.

16. Apparatur (100) zum Waschen und/oder Entwässern von Zellstoff mit einer beweglichen ersten permeablen Fläche (21), mit der zusammen Pulpe im Betrieb transportiert wird, wobei die Apparatur die Pulpeverteilungsvorrichtung (10) nach einem der Ansprüche 1-11 umfasst.

17. Apparatur nach Anspruch 16, wobei es sich um eine Walzenpresse (100) handelt, und wobei die bewegliche erste permeable Fläche (21) eine drehbare, perforierte Außenfläche einer Presswalze (20) der Walzenpresse ist.

## Revendications

1. Dispositif de distribution de pâte (10) pour la distribution de pâte cellulosique ayant une concentration de 2 à 13 % à une première surface perméable mobile (21) dans un appareil (100) de lavage et/ou de déshydratation de pâte cellulosique, moyennant quoi la pâte, en fonctionnement, est transportée avec la première surface perméable, ledit dispositif de distribution de pâte comprenant
un orifice d'entrée (11) pour l'entrée de pâte cellulosique,
un orifice de sortie (12) pour la sortie de pâte cellulosique sur la première surface perméable, et
un premier moyen de distribution rotatif (13' ; 13'') agencé dans le dispositif de distribution de pâte pour une distribution longitudinale de pâte,
**caractérisé en ce que** le premier moyen de distribution rotatif (13' ; 13'') est une vis ou un rouleau et **en ce que** le dispositif de distribution de pâte comprend en outre
une deuxième surface perméable (14' ; 14''; 14''' ; 14"" ) agencée de façon à, pendant le fonctionnement, autoriser un débit de filtrat de pâte dans le dispositif de distribution de pâte (10), moyennant quoi une déshydratation initiale de la pâte a lieu dans le dispositif de distribution de pâte, dans lequel la deuxième surface perméable (14") est rotative.

2. Dispositif de distribution de pâte selon la revendication 1, dans lequel le premier moyen de distribution rotatif (13' ; 13'') et la deuxième surface perméable (14' ; 14" ; 14"' ; ; 14"") sont agencés dans un logement (18) du dispositif de distribution de pâte (10).

3. Dispositif de distribution de pâte selon la revendication 1 ou 2, dans lequel la deuxième surface perméable (14") est la surface extérieure du premier moyen de distribution rotatif (13"), le premier moyen de distribution rotatif étant un rouleau perforé.

4. Dispositif de distribution de pâte selon la revendication 3, comprenant un dispositif de racle formant un moyen de nettoyage (15") pour l'enlèvement de pâte déshydratée de la deuxième surface perméable (14").

5. Dispositif de distribution de pâte selon la revendication 3 ou 4, comprenant un deuxième moyen de distribution rotatif (16) pour une distribution longitudinale de pâte.

6. Dispositif de distribution de pâte selon la revendication 5, dans lequel le deuxième moyen de distribution rotatif (16) est agencé avec son axe de rotation plus éloigné de la première surface perméable (21) que l'axe de rotation du premier moyen de distribution rotatif (13'').

7. Dispositif de distribution de pâte selon la revendication 5 ou 6, dans lequel le deuxième moyen de distribution rotatif (16) est choisi dans le groupe : d'une vis, d'une vis à ailettes, et d'une vis à lames de raclage.

8. Dispositif de distribution de pâte selon l'une quelconque des revendications précédentes, comprenant un dispositif pour l'ajout de liquide de lavage (17) agencé pour, en fonctionnement, ajouter du liquide de lavage à la pâte dans le dispositif de distribution de pâte (10) à proximité de la deuxième surface perméable (14' ; 14" ; 14'" ; 14"").

9. Dispositif de distribution de pâte selon l'une quelconque des revendications précédentes, dans lequel la première surface perméable (21) tourne dans une direction (D1) et le premier moyen de distribution rotatif (13' ; 13") tourne dans une direction (D2), de sorte que sa surface périphérique se déplace dans la même direction que la première surface perméable dans la zone où ils se font face l'un l'autre, le premier moyen de distribution rotatif étant agencé de sorte qu'un matelas de pâte puisse être formé entre le premier moyen de distribution rotatif et la première surface perméable.

10. Dispositif de distribution de pâte selon l'une quelconque des revendications précédentes, dans lequel l'orifice de sortie (12) s'ouvre vers un matelas de pâte, qui, pendant le fonctionnement, est formé sur la première surface perméable (21) et lequel orifice de sortie (12) a une longueur qui correspond à la largeur du matelas de pâte et une largeur délimitée par une première paroi longue (18a) et une deuxième paroi longue opposée (18b) essentiellement parallèle à la première paroi longue, le premier moyen de distribution rotatif (13' ; 13") étant agencé entre les parois longues (18a, 18b) pour distribuer la pâte essentiellement sur toute la longueur de l'orifice de sortie, et le premier moyen de distribution rotatif étant placé de sorte qu'une première distance (a1) entre le premier moyen de distribution rotatif et la première paroi longue (18a) soit plus grande qu'une deuxième distance (a2) entre le premier moyen de distribution rotatif et la première surface perméable.

11. Dispositif de distribution de pâte selon la revendication 10, dans lequel le premier moyen de distribution rotatif (13' ; 13"") est ainsi placé qu'une troisième distance (a3) entre le premier moyen de distribution rotatif et la deuxième paroi longue (18b) soit essentiellement plus petite que la deuxième distance (a2) entre le premier moyen de distribution rotatif et la première surface perméable (21).

12. Dispositif de distribution de pâte selon l'une quelconque des revendications précédentes, dans lequel le dispositif de distribution de pâte (10) comprend en outre une plaque de chambre (26) qui forme une chambre (25) de recueil de filtrat.

13. Dispositif de distribution de pâte selon la revendication 12, dans lequel la chambre (25) de recueil de filtrat est divisée en un certain nombre de chambres séparées (25').

14. Dispositif de distribution de pâte selon l'une quelconque des revendications précédentes, dans lequel des rinceurs (27) sont prévus pour l'enlèvement de pâte déshydratée de la deuxième surface perméable (14' ; 14" ; 14''' ; 14'''').

15. Dispositif de distribution de pâte selon l'une quelconque des revendications 1 à 13, dans lequel des tuyaux aspirants (29) sont prévus pour le rétrobalayage afin d'enlever la pâte déshydratée de la deuxième surface perméable (14' ; 14" ; 14''' ; 14'''').

16. Appareil (100) de lavage et/ou de déshydratation de pâte cellulosique ayant une première surface perméable mobile (21) avec laquelle la pâte, en fonctionnement, est transportée, ledit appareil comprenant le dispositif de distribution de pâte (10) de l'une quelconque des revendications 1 à 11.

17. Appareil selon la revendication 16, qui est une presse à rouleau (100) et la première surface perméable mobile (21) est une surface extérieure perforée rotative d'un rouleau de presse (20) de la presse à rouleau.
